# FASCICULE DE BREVET EUROPEEN

(11) **EP 3 691 501 B1**
(45) Date de publication et mention de la délivrance du brevet: **07.06.2023**
(21) Numéro de dépôt: 18789202.1
(22) Date de dépôt: 25.09.2018
(51) Int. Cl.: A47J 43/07

(54) **SYSTEME DE PREPARATION D'UNE RECETTE DE CUISINE**
SYSTEM ZUR VORBEREITUNG EINES KOCHREZEPTES
SYSTEM FOR PREPARING A COOKING RECIPE

(30) Priorité: 04.10.2017 FR 1759273
(43) Date de publication de la demande: 12.08.2020
(73) Titulaire: SEB S.A., 69130 Ecully (FR)
(72) Inventeur: BLOND, Laurent, 21200 Beaune (FR); DESCAMPS, Aymeric, 69007 Lyon (FR)
(74) Mandataire: Germain Maureau
(86) Numéro de dépôt international: PCT/FR2018/052365
(87) Numéro de publication internationale: WO 2019/068988

(56) Documents cités:
- US-A1- 2016 241 653
- US-A1- 2017 035 249

## Description

### Domaine de l'invention

La présente invention concerne un système et un procédé de préparation d'une recette de cuisine.

### Art antérieur

Il est connu d'utiliser un appareil culinaire comprenant une interface guidant l'utilisateur et une unité de traitement apte à commander l'exécution de plusieurs étapes de préparation.

Un tel appareil et système est divulgué dans le document US2016241653. Pour qu'un seul appareil culinaire puisse réaliser ces étapes et guider au mieux l'utilisateur, des fonctions additionnelles doivent être prises en compte par l'appareil culinaire, comme par exemple la mesure du poids d'un ingrédient.

Il est connu d'intégrer une balance à un appareil culinaire. Toutefois l'appareil culinaire ainsi créé peut s'avérer complexe et le fait que de nombreuses fonctions soient intégrées dans un seul appareil culinaire peut avoir pour conséquence d'empêcher la réalisation des deux étapes indépendantes l'une de l'autre en même temps.

De plus, la précision des mesures diverge avec le temps et un nouveau réglage en service après-vente impose l'indisponibilité de l'appareil culinaire tout entier.

Par ailleurs, la fonction de la balance utilisée par un tel appareil culinaire pourrait également être utilisée par d'autres appareils culinaires déjà en possession de l'utilisateur. Il y a donc une redondance de la fonction de balance dans plusieurs appareils culinaires intégrant cette fonction ou bien impossibilité d'utiliser la fonction de balance d'un appareil avec un autre appareil non équipé possédés par l'utilisateur.

La présente invention vise à résoudre tout ou partie des inconvénients mentionnés ci-dessus.

### Exposé de l'invention

A cet effet, la présente invention concerne un système de préparation d'une recette de cuisine comprenant une pluralité d'ingrédients, ledit système de préparation comprenant :
- un appareil de mesure comprenant :
   - un capteur et présentant un emplacement de mesure configuré pour recevoir au moins un ingrédient d'une liste d'ingrédients ou un contenant comprenant ledit au moins un ingrédient, le capteur étant agencé pour réaliser une mesure d'une grandeur physique relative audit au moins un ingrédient,
   - un premier moyen de communication avec un terminal de commande et/ou de contrôle adapté pour transmettre une information sur ladite mesure d'une grandeur physique relative audit au moins un ingrédient à destination du terminal de commande et/ou de contrôle,
- un appareil culinaire comprenant :
   - un récipient apte à recevoir la pluralité d'ingrédients de la recette de cuisine,
   - un deuxième moyen de communication avec le terminal de commande et/ou de contrôle adapté pour recevoir une instruction de commande en provenance du terminal de commande et/ou de contrôle et de préférence également adaptés pour transmettre une information de contrôle à destination du terminal de commande et/ou de contrôle,
- le terminal de commande et/ou de contrôle comprenant un même troisième moyen de communication adapté pour échanger des informations simultanément d'une part avec l'appareil de mesure et d'autre part avec l'appareil culinaire.

Cette disposition permet de coordonner l'utilisation de l'appareil de mesure et de l'appareil culinaire en profitant de la capacité de ces deux appareils de communiquer simultanément avec le terminal de commande et/ou de contrôle.

Dans le présent texte, il est entendu par « simultanément » une communication selon laquelle l'échange d'informations entre le terminal de commande et/ou de contrôle et l'appareil de mesure ne stoppe pas et/ou ne ralentit pas un échange d'informations précédemment établi entre le terminal de commande et/ou de contrôle et l'appareil culinaire.

Aussi, ce même troisième moyen de communication utilise un même port de communication pour communiquer à la fois avec le premier moyen de communication de l'appareil de mesure et avec le deuxième moyen de communication de l'appareil culinaire.

Un tel port est par exemple un port Bluetooth^{®}.

Le système de préparation permet, grâce à l'appareil culinaire et l'appareil de mesure, la réalisation de deux fonctions indépendantes l'une de l'autre en même temps. Il peut s'agir par exemple d'une cuisson réalisée par l'appareil culinaire et d'une pesée réalisée par l'appareil de mesure.

De plus, un appareil culinaire comprenant une balance intégrée serait plus susceptible d'être victime de dysfonctionnements de la balance, celle-ci étant intégrée dans un espace exigu.

Si l'utilisateur souhaite faire réparer une balance intégrée ne fonctionnant plus, l'appareil culinaire doit être réparé et est ainsi indisponible. Le présent système permet de n'avoir à faire réparer que l'appareil de mesure dans le cas d'une panne similaire.

Par ailleurs, une balance intégrée aurait pour inconvénient d'être difficilement utilisable seule ou en association avec un autre appareil culinaire pour préparer une recette de cuisine.

Selon un aspect de l'invention, la grandeur physique est un poids. Ainsi il n'est pas nécessaire d'ajouter à l'appareil culinaire un capteur de poids selon un montage complexe et peu fiable puisque la fonction de mesure du poids est réalisée par un appareil de mesure indépendant.

Selon un aspect de l'invention, l'appareil culinaire, l'appareil de mesure et le terminal de commande et/ou de contrôle sont distincts.

Cette disposition permet d'utiliser des appareils déjà existants pour constituer le système de préparation, les appareils étant aptes à échanger des informations simultanément par l'intermédiaire du terminal de commande et/ou de contrôle.

Cette disposition permet de réaliser un appairage simultané de l'appareil culinaire et de l'appareil de mesure pour améliorer la rapidité de fonctionnement du système de préparation.

Selon un aspect de l'invention, le système de préparation d'une recette de cuisine comporte :
- une mémoire comprenant la liste d'ingrédients et une liste de recettes de cuisine aptes à être réalisées par l'appareil culinaire, chaque recette de cuisine comprenant une pluralité d'ingrédients de la liste d'ingrédients en des quantités données correspondant à un nombre donné de portions individuelles,
- une interface utilisateur comprenant :
   - une commande de saisie d'au moins un ingrédient de la liste d'ingrédients, la commande de saisie étant apte à définir au moins un ingrédient sélectionné correspondant, et/ou
   - une commande de sélection d'une recette de cuisine de la liste de recettes de cuisine et d'un nombre de portions individuelles, la commande de sélection étant apte à définir une recette de cuisine sélectionnée correspondante.

Cette disposition permet de coordonner le fonctionnement de l'appareil de mesure et de l'appareil culinaire à partir d'une seule interface utilisateur. Il est ainsi possible de sélectionner une recette de cuisine à réaliser par l'appareil culinaire en s'aidant des informations sur les mesures des ingrédients de la recette de cuisine renvoyées par l'appareil de mesure ou de sélectionner un ingrédient qui est à peser par l'appareil de mesure en vue de déterminer une recette de cuisine à réaliser ultérieurement par l'appareil culinaire.

Selon un aspect de l'invention, le terminal de commande et/ou de contrôle comprend une unité centrale pourvue d'un processeur agencé pour générer :
- une liste restreinte de recettes de cuisine à partir de la liste de recettes de cuisine présente dans la mémoire en fonction de l'au moins un ingrédient sélectionné via l'interface utilisateur et de l'information sur ladite mesure d'une grandeur physique relative à l'au moins un ingrédient sélectionné, et/ou
- une information d'accomplissement de mesure en fonction de la recette de cuisine sélectionnée et de l'information sur ladite mesure d'une grandeur physique relative à un ingrédient correspondant de la recette de cuisine sélectionnée.

Cette disposition permet à l'utilisateur de définir une recette de cuisine sélectionnée puis de procéder au pesage des ingrédients grâce à l'appareil de mesure. Ainsi il n'est plus nécessaire de valider auprès de l'appareil culinaire qu'un ingrédient est disponible en une certaine quantité lorsque celle-ci est mesurée par l'appareil de mesure puisqu'une information d'accomplissement de mesure est envoyée.

La préparation de la recette de cuisine est ainsi plus rapide, aucune validation n'étant nécessaire après avoir réalisé la mesure de la grandeur physique.

L'élaboration d'une liste restreinte permet alternativement de déterminer quelles recettes de cuisine sont susceptibles d'être réalisées avec un ingrédient disponible venant d'être pesé.

Plutôt que de rechercher dans la liste complète l'utilisateur pèse son ingrédient et l'unité centrale applique un filtre pour déterminer une liste restreinte dans laquelle chaque recette de cuisine comprend l'ingrédient dans au moins la quantité préalablement pesée.

Une fois la recette de cuisine sélectionnée, le fonctionnement est le même que lorsque l'utilisateur choisit une recette de cuisine avant de commencer la pesée des ingrédients.

Selon un aspect de l'invention, l'information d'accomplissement de mesure comprend l'information sur la mesure et/ou un renseignement d'accomplissement de la mesure dudit ingrédient.

Cette disposition permet d'avertir l'appareil culinaire de la réalisation de la mesure de la grandeur physique relative à l'au moins un ingrédient. Ainsi il n'est pas nécessaire de transmettre à l'appareil culinaire toutes les valeurs de mesure des grandeurs physiques.

Soit l'information sur la mesure et le renseignement d'accomplissement sont transmis soit seul le renseignement d'accomplissement est transmis. Ainsi le processeur de l'unité de traitement n'a pas besoin de connaître le détail des mesures réalisées par l'appareil de mesure, au minimum seul le renseignement selon lequel une valeur cible a été mesurée suffit.

Selon un aspect de l'invention, la mémoire est comprise au moins partiellement dans l'appareil culinaire, le terminal de commande et/ou de contrôle et/ou un serveur distant, le serveur distant étant configuré pour échanger des informations avec l'appareil culinaire et/ou le terminal de commande et/ou de contrôle.

Cette disposition permet un fonctionnement ne nécessitant pas de connexion au serveur distant car au moins une partie de la mémoire est située dans l'appareil culinaire ou le terminal de commande et/ou de contrôle.

Il est également possible de rechercher dans le serveur distant une recette de cuisine non enregistrée localement.

Par ailleurs, la liste de recettes de cuisine et la liste d'ingrédients peuvent être mises à jour régulièrement et automatiquement de façon centralisée sans intervention de l'utilisateur.

Selon un aspect de l'invention, l'interface utilisateur est disposée sur l'appareil culinaire et/ou sur le terminal de commande et/ou de contrôle.

Cette disposition permet d'utiliser un écran du terminal de commande et/ou de contrôle ou de l'appareil culinaire déjà existant comme interface utilisateur du système de préparation de recettes de cuisine.

Selon un aspect de l'invention, l'interface utilisateur est configurée pour afficher l'information sur la mesure et/ou une valeur cible correspondant à une quantité d'un ingrédient de la recette de cuisine sélectionnée.

Cette disposition permet à l'utilisateur de déterminer rapidement s'il doit ou non encore ajouter une certaine quantité de l'ingrédient disposé dans l'emplacement de mesure.

Selon un aspect de l'invention, l'interface utilisateur est configurée pour émettre un signal relatif à l'information d'accomplissement de mesure.

Cette disposition permet de signaler à l'utilisateur que la mesure de l'ingrédient est réalisée.

Selon un aspect de l'invention, le signal est visuel et/ou sonore. Le signal sonore permet de détourner le regard de l'interface utilisateur et donc de se concentrer sur le versement de l'ingrédient dans l'emplacement de mesure.

Selon un aspect de l'invention, l'interface utilisateur est configurée pour afficher une indication relative à l'information d'accomplissement de mesure.

Selon un aspect de l'invention, l'interface utilisateur est configuée pour afficher au moins deux indications relatives à deux informations d'accomplissement de mesure de deux ingrédients correspondants de la recette de cuisine.

Cette disposition permet à un utilisateur de déterminer rapidement en consultant l'interface utilisateur quels sont les ingrédients de la recette de cuisine qu'il a déjà mesurés avec l'appareil de mesure.

L'utilisateur peut également mesurer les ingrédients dans l'ordre qu'il souhaite lors de la préparation de la recette de cuisine.

Selon un aspect de l'invention, le terminal de commande et/ou de contrôle est configuré pour échanger des informations d'une part avec l'appareil culinaire préalablement appairé et d'autre part avec l'appareil de mesure sans appairage préalable.

L'appairage est à comprendre comme étant un jumelage d'un appareil et d'une application exécutée sur le terminal de commande et/ou de contrôle par l'intermediaire d'une liaison cryptée nécessitant une validation physique au niveau de l'interface utilisateur pour confirmer le jumelage.

Lorsque le terminal de commande et/ou de contrôle ne sait pas appairer deux appareils en même temps, il peut envoyer une trame appairée vers l'appareil culinaire et une trame non-appairée vers l'appareil de mesure.

La communication entre les deux appareils et le terminal de commande et/ou de contrôle en est ainsi simplifiée : l'utilisateur a la sensation de commander et/ou de contrôler directement et en même temps ces deux appareils.

Selon un aspect de l'invention le protocole de communication utilisé entre le premier, deuxième et troisième moyens de communication est un protocole de type Bluetooth, notamment le BLE.

La présente invention concerne également un procédé de préparation d'une recette de cuisine par un système de préparation tel que décrit ci-avant, le procédé de préparation comprenant les étapes suivantes :
- sélection d'une recette de cuisine comprenant une pluralité d'ingrédients dont les quantités se rapportent à des grandeurs physiques dans la liste de recettes de cuisine et d'un nombre de portions individuelles au niveau de la commande de sélection de l'interface utilisateur,
- mesure, pour chaque ingrédient de la pluralité d'ingrédients de la recette de cuisine sélectionnée, d'une grandeur physique correspondante par le capteur,
- introduction de chaque ingrédient de la pluralité d'ingrédients de la recette de cuisine sélectionnée dans le récipient de l'appareil culinaire.

Le procédé de préparation est facile à réaliser puisque chaque mesure est validée automatiquement par le système de préparation sans que l'utilisateur n'ait à intervenir.

En effet, le terminal sert de passerelle de communication entre l'appareil de mesure et l'appareil culinaire.

Selon un aspect de l'invention, le procédé de préparation d'une recette de cuisine comprend les étapes préalables suivantes :
- saisie d'au moins un ingrédient compris dans la liste d'ingrédients au niveau de la commande de saisie de l'interface utilisateur, ladite saisie aboutissant à la définition d'au moins un ingrédient sélectionné,
- mesure pour l'au moins un ingrédient sélectionné de la grandeur physique par le capteur,
- définition d'une liste de recettes de cuisine restreinte de recettes de cuisine à partir de la liste de recettes de cuisine présente dans la mémoire en fonction de l'au moins un ingrédient sélectionné via l'interface utilisateur et de la mesure de la grandeur physique relative à l'au moins un ingrédient sélectionné, l'au moins un ingrédient sélectionné étant compris dans les recettes de cuisine de la liste restreinte.

Cette disposition permet de peser un ingrédient que l'on a à disposition avant de sélectionner une recette de cuisine à exécuter par le système de préparation. L'ingrédient en question sera ainsi déjà pesé.

La présente invention concerne également un procédé de commande et/ou de contrôle d'un appareil culinaire et d'un appareil de mesure distincts comprenant les étapes suivantes :
- affichage d'une grandeur physique relative audit ingrédient d'une recette de cuisine, la grandeur physique étant mesurée par un capteur,
- comparaison de la grandeur physique à une valeur cible,
- élaboration d'une information d'accomplissement de mesure lorsqu'une information sur la mesure de la grandeur physique correspond à la valeur cible,
- envoi de l'information d'accomplissement de mesure à destination de l'appareil culinaire et/ou enregistrement de l'information d'accomplissement de mesure.

Cette disposition permet de coordonner le fonctionnement de l'appareil de mesure et de l'appareil culinaire. L'utilisateur n'est ainsi pas obligé de commander séparément l'appareil de mesure et l'appareil culinaire. En effet lorsqu'une mesure d'une valeur cible doit être réalisée, l'appareil culinaire en est informé automatiquement, c'est-à-dire sans intervention de l'utilisateur.

Selon un aspect de l'invention, la correspondance entre la valeur cible et l'information sur la mesure est définie par un écart entre l'information mesurée et la valeur cible inférieure à un pourcentage particulier ou par un écart défini dans une unité de la grandeur physique.

Cette disposition permet de valider la grandeur physique d'un ingrédient même si la valeur cible n'est pas exactement atteinte.

Selon un aspect de l'invention, l'écart est de 5% ou correspond à un poids de 20g lorsque la grandeur physique est un poids.

Selon un aspect de l'invention, les étapes d'affichage, de comparaison, d'élaboration et d'envoi de l'information d'accomplissement de mesure sont réalisées successivement pour au moins deux ingrédients de la recette de cuisine.

Cette disposition permet de guider l'utilisateur lors de la réalisation de la recette de cuisine. Lorsque la mesure de la grandeur physique d'un ingrédient est terminée, l'affichage de la grandeur physique d'un autre ingrédient peut commencer.

L'utilisateur peut alors peser successivement des ingrédients de la recette de cuisine sans avoir à interagir avec l'appareil culinaire ou l'appareil de mesure.

Selon un aspect de l'invention, le procédé de commande et/ou de contrôle comprend une étape préalable de sélection de la recette de cuisine dans une liste de recettes de cuisine.

Cette disposition permet un accès rapide à la recette de cuisine envisagée par l'utilisateur.

Selon un aspect de l'invention, au moins une partie de la liste de recettes de cuisine est obtenue par échange d'informations avec un serveur distant.

Cette disposition permet à l'utilisateur de disposer de toutes les recettes de cuisine existantes dans le serveur distant ou d'utiliser les recettes de cuisine existantes enregistrées dans l'appareil culinaire.

Selon un aspect de l'invention, la recette sélectionnée est transmise à l'appareil culinaire à partir du serveur distant.

Cette disposition permet à l'utilisateur de télécharger simplement une recette de cuisine comprise dans le serveur distant.

Selon un aspect de l'invention, l'appareil culinaire échange des informations avec le serveur distant selon un premier protocole de communication et avec l'appareil de mesure selon un deuxième protocole de communication.

Cette disposition permet de centraliser les informations au niveau de l'appareil culinaire.

La présente invention concerne aussi un produit programme d'ordinateur comprenant des instructions de code agencées pour mettre en oeuvre les étapes d'un procédé de commande et/ou de contrôle tel que décrit ci-avant lorsque ledit programme est exécuté sur un processeur de l'appareil culinaire ou d'un terminal de commande et/ou de contrôle.

Selon un aspect de l'invention, le produit programme d'ordinateur est agencé sous forme d'application téléchargeable sur le terminal de commande et/ou de contrôle lorsque ledit programme est exécuté sur le processeur du terminal de commande et/ou de contrôle.

La présente invention concerne également un terminal de commande et/ou de contrôle comprenant en mémoire les instructions de code d'un produit programme d'ordinateur tel que décrit ci-avant et agencé pour exécuter un tel produit programme d'ordinateur.

La présente invention concerne en outre un procédé de commande et/ou de contrôle d'un appareil culinaire et d'un appareil de mesure distincts comprenant les étapes suivantes :
- sélection d'au moins un ingrédient dans une liste d'ingrédients,
- affichage d'une grandeur physique relative audit ingrédient, la grandeur physique étant mesurée par un capteur,
- élaboration d'une information d'accomplissement de mesure lorsqu'une information sur la mesure de la grandeur physique correspond à une valeur cible, la valeur cible étant la dernière valeur de la grandeur physique et étant obtenue par une étape de validation ou lorsque la grandeur physique mesurée reste sensiblement constante pendant une durée donnée,
- détermination d'une liste restreinte de recettes de cuisine parmi une liste de recettes de cuisine comprenant l'ingrédient selon une quantité correspondant à la valeur cible, l'au moins une recette de cuisine déterminée étant comprise dans une liste restreinte de recettes de cuisine.

Cette disposition permet de rechercher toutes les recettes de cuisine pouvant être réalisées par l'appareil culinaire dans laquelle l'ingrédient peut être utilisé selon la quantité mesurée.

Selon un aspect de l'invention, le procédé de commande et/ou de contrôle comprend une étape de sélection de l'au moins une recette de cuisine dans la liste restreinte de recettes de cuisine.

Cette disposition permet de sélectionner une recette de cuisine qui sera effectuée par l'appareil culinaire puis de confirmer à l'appareil culinaire que la mesure de l'ingrédient a été effectuée et que le reste de la recette de cuisine peut maintenant être effectué.

Selon un aspect de l'invention, au moins une partie de la liste de recettes de cuisine est obtenue par échange d'informations avec un serveur distant.

Cette disposition permet à l'utilisateur de disposer de toutes les recettes de cuisine existantes dans le serveur distant ou d'utiliser les recettes de cuisine existantes enregistrées dans l'appareil culinaire.

Selon un aspect de l'invention, l'appareil culinaire échange des informations avec le serveur distant selon un premier protocole de communication et avec l'appareil de mesure selon un deuxième protocole de communication.

Cette disposition permet de centraliser les informations au niveau de l'appareil culinaire.

La présente invention concerne aussi un produit programme d'ordinateur comprenant des instructions de code agencées pour mettre en oeuvre les étapes d'un procédé de commande et/ou de contrôle tel que décrit ci-avant lorsque ledit programme est exécuté sur un processeur de l'appareil culinaire ou d'un terminal de commande et/ou de contrôle.

Selon un aspect de l'invention, le produit programme d'ordinateur est agencé sous forme d'application téléchargeable sur le terminal de commande et/ou de contrôle lorsque ledit programme est exécuté sur le processeur du terminal de commande et/ou de contrôle.

La présente invention concerne également un terminal de commande et/ou de contrôle comprenant en mémoire les instructions de code d'un produit programme d'ordinateur tel que décrit ci-avant et agencé pour exécuter un tel produit programme d'ordinateur.

Les différents aspects définis ci-dessus non incompatibles peuvent être combinés.

### Brève description des figures

L'invention sera mieux comprise à l'aide de la description détaillée qui est exposée ci-dessous en regard du dessin annexé dans lequel :
- les figures 1 et 2 sont des vues schématiques de systèmes de préparation de recettes de cuisine ;
- les figures 3 et 4 sont des vues d'une interface utilisateur du système de préparation culinaire ;
- la figure 5 est un ordinogramme représentant les étapes d'un premier procédé de commande et/ou de contrôle d'un appareil culinaire et d'un appareil de mesure ;
- la figure 6 est un ordinogramme d'un second procédé de commande et/ou de contrôle
- la figure 7 est un ordinogramme d'un procédé d'utilisation du système de préparation culinaire.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

### Système de préparation d'une recette de cuisine

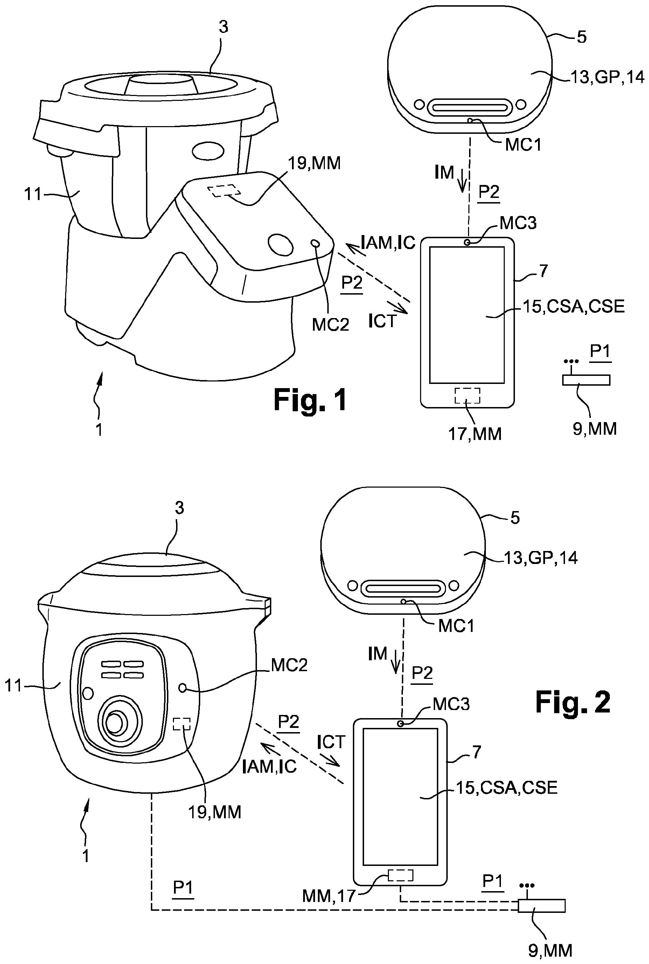

Comme illustré aux figures 1 et 2, un système de préparation 1 d'une recette de cuisine comprend un appareil culinaire 3, un appareil de mesure 5 et un terminal de commande et/ou de contrôle 7.

L'appareil culinaire 3, l'appareil de mesure 5 et le terminal de commande et/ou de contrôle 7 sont des appareils distincts. Dans le mode de réalisation de la figure 1, l'appareil culinaire 3 est un appareil de cuisson et de hachage et dans le mode de réalisation de la figure 2, l'appareil culinaire 3 est un appareil de cuisson sous pression.

Chaque recette de cuisine est définie par une pluralité d'ingrédients, chacun en une quantité donnée, et au moins une cuisson à une température donnée pendant une durée donnée. Les quantités données correspondent à un nombre donné de portions individuelles.

Au moins une partie de la pluralité des recettes de cuisine est comprise en mémoire de l'appareil culinaire 3 et/ou du terminal de commande et/ou de contrôle 7.

Le terminal de commande et/ou de contrôle 7 est également agencé pour se connecter à un serveur distant 9 dans le but de télécharger d'autres recettes de cuisine.

De manière optionnelle l'appareil culinaire 3 peut être également configuré pour télécharger des recettes de cuisine en provenance du serveur distant 9.

L'ensemble des recettes de cuisine accessible à l'utilisateur constitue une liste de recettes de cuisine qui sont aptes à être réalisées par l'appareil culinaire 3. Ainsi le système de préparation 1 considéré dans son ensemble comprend une mémoire MM comprenant la liste de recettes de cuisine et également une liste d'ingrédients qui sont utilisés dans les recettes de cuisine.

La mémoire MM est comprise au moins partiellement dans l'appareil culinaire 3, dans le terminal de commande et/ou de contrôle 7 et/ou dans le serveur distant 9 qui est configuré pour échanger des informations avec l'appareil culinaire 3 et/ou le terminal de commande et/ou de contrôle 7.

L'appareil culinaire 3 échange des informations avec le serveur distant 9 selon un premier protocole de communication P1, par exemple un protocole Wifi, et avec l'appareil de mesure 5 selon un deuxième protocole de communication P2, par exemple un protocole Bluetooth. Le terminal de commande et/ou de contrôle 7 est également configuré pour échanger des informations selon les protocoles de communication P1 et P2.

Concernant les modes de réalisation des figures 1 et 2, l'appareil culinaire 3 comprend un récipient 11 de cuisson apte à recevoir la pluralité d'ingrédients de la recette de cuisine effectuée, en même temps pour l'appareil de cuisson sous pression et progressivement selon la recette de cuisine pour l'appareil de cuisson et de hachage.

L'appareil de mesure 5 comprend un capteur 13 agencé pour mesurer une grandeur physique GP.

Il s'agit d'une balance apte à mesurer le poids d'un ingrédient. L'appareil de mesure 5 présente un emplacement de mesure 14 configuré pour recevoir au moins un ingrédient de la recette de cuisine ou un contenant comprenant ledit au moins un ingrédient.

Le terminal de commande et/ou de contrôle 7 est configuré pour échanger des informations avec l'appareil culinaire 3 et l'appareil de mesure 5 simultanément. L'échange d'informations peut se produite après un appairage du terminal de commande et/ou de contrôle 7 avec l'appareil culinaire 3.

L'appairage est à comprendre comme étant un jumelage de l'appareil culinaire 3 et d'une application exécutée sur le terminal de commande et/ou de contrôle 7 par l'intermédiaire d'une liaison cryptée nécessitant une validation physique au niveau du terminal de commande et/ou de contrôle 7 pour confirmer le jumelage.

L'appareil de mesure 5 ne nécessite pas d'être appairé pour qu'une communication soit établie avec le terminal de commande et/ou de contrôle 7. En effet dans les modes de réalisation des figures 1 et 2, le terminal de commande et/ou de contrôle 7 ne peut pas appairer deux appareils en même temps.

Le terminal de commande et/ou de contrôle 7 envoie donc une trame appairée vers l'appareil culinaire 3 et une trame non-appairée vers l'appareil de mesure 5 pour que la communication soit simultanée.

Pour que cet échange d'informations soit possible, l'appareil de mesure 5 comprend un premier moyen de communication MC1 avec le terminal de commande et/ou de contrôle 7, par exemple un émetteur-récepteur adapté pour transmettre une information sur la mesure IM d'une grandeur physique GP comme un poids.

L'appareil culinaire 3 comprend un deuxième moyen de communication MC2 avec le terminal de commande et/ou de contrôle 7, par exemple un émetteur-récepteur adapté pour recevoir une instruction de commande IC en provenance du terminal de commande et/ou de contrôle 7 et de préférence également adapté pour transmettre une information de contrôle ICT à destination du terminal de commande et/ou de contrôle 7.

Le terminal de commande et/ou de contrôle 7, quant à lui, comprend un même troisième moyen de communication MC3 adapté pour échanger des informations avec l'appareil de mesure 5 et l'appareil culinaire 3 simultanément, c'est-à-dire sans qu'un canal de communication ne soit ralenti ou stoppé par le fonctionnement de l'autre.

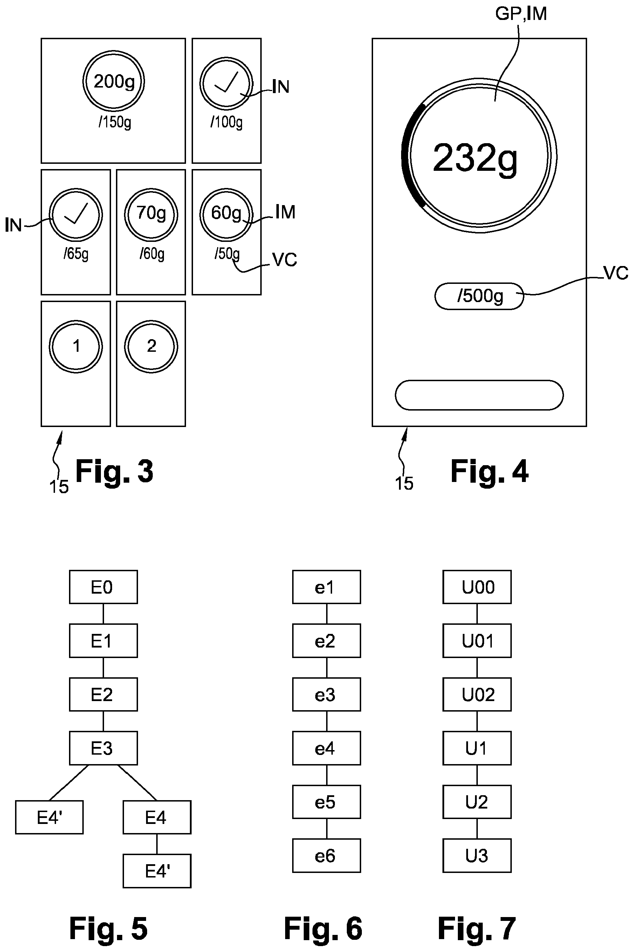

Comme illustré aux figures 3 et 4, le système de préparation 1 comprend une interface utilisateur 15 configurée pour afficher une grandeur physique GP mesurée par le capteur 13 de l'appareil de mesure 5. L'interface utilisateur 15 est disposée sur le terminal de commande et/ou de contrôle 7.

L'interface utilisateur 15 est configurée pour afficher l'information sur la mesure IM pour permettre à l'utilisateur de savoir si la quantité de l'ingrédient pesé est assez importante en la comparant à une valeur cible VC.

L'interface utilisateur 15 comprend une commande de saisie CSA d'au moins un ingrédient de la liste d'ingrédients, ladite commande de saisie CSA étant apte à définir au moins un ingrédient sélectionné correspondant.

L'interface utilisateur 15 comprend également une commande de sélection CSE de l'au moins une recette de cuisine de la liste de recettes de cuisine et d'un nombre de portions individuelles, la commande de sélection CSE étant apte à définir une recette de cuisine sélectionnée correspondante.

Le terminal de commande et/ou de contrôle 7 comprend également une unité centrale 17 pourvue d'un processeur configuré pour comparer une grandeur physique GP mesurée à la valeur cible VC.

Dans le cadre de la réalisation d'une recette de cuisine dont les quantités d'ingrédients sont connues par l'appareil culinaire 3 et/ou du terminal de commande et/ou de contrôle 7, la valeur cible VC est la valeur que doit atteindre l'ingrédient pesé comme illustré à la figure 3.

Dans ce cas, lorsqu'une information sur la mesure IM de la grandeur physique GP correspond à une valeur cible VC, c'est-à-dire est sensiblement égale à 5% près et/ou à 20g près, l'unité centrale 17 considère que la mesure et donc l'étape de la recette de cuisine correspondante est réalisée.

Hors du cadre de la réalisation d'une recette de cuisine, il est possible de renseigner le type d'ingrédient pesé sur l'interface utilisateur 15 et de procéder au pesage.

Dans ce cas, l'information sur la mesure IM de la grandeur physique GP est affichée et l'unité centrale 17 est agencée pour générer une liste restreinte de recettes de cuisine à partir de la liste de recettes en fonction de l'ingrédient sélectionné et de son information sur la mesure IM.

Suite à la sélection d'une recette de cuisine soit directement soit par la pesée préalable d'un ingrédient puis la sélection dans la liste restreinte, l'unité centrale 17 est agencée pour générer une information d'accomplissement de mesure IAM d'un ingrédient de la recette de cuisine lorsque celui-ci est pesé et qu'il y a correspondance entre l'information sur la mesure IM et la valeur cible VC.

L'information d'accomplissement de mesure IAM comprend un renseignement d'accomplissement de la mesure et éventuellement la valeur cible VC.

Le terminal de commande et/ou de contrôle 7 est agencé pour envoyer l'information d'accomplissement de mesure IAM à l'appareil culinaire 3 pour l'avertir de la réalisation de cette étape de mesure dans la préparation de la recette de cuisine.

Par ailleurs, l'interface utilisateur 15 est configurée pour émettre un signal visuel et/ou sonore relatif à la génération de l'information d'accomplissement de mesure IAM, notamment par l'affichage d'une indication IN relative à ladite information. Il est possible d'afficher plusieurs indications IN simultanément pour que l'utilisateur sache quels ingrédients de la recette de cuisine ont déjà été pesés.

### Premier procédé de commande et/ou de contrôle du système de préparation

Le système de préparation 1 décrit ci-avant permet de commander et/ou contrôler l'appareil culinaire 3 et l'appareil de mesure 5, ces derniers étant des appareils distincts.

Le premier procédé de commande et/ou de contrôle peut être réalisé par le terminal de commande et/ou de contrôle 7 ou par l'appareil culinaire 3. Dans ce cas, l'interface utilisateur 15 est à considérer comme étant comprise dans l'appareil culinaire 3 et les tâches exécutées par le terminal de commande et/ou de contrôle 7 sont exécutées par une unité de traitement 19 de l'appareil culinaire 3, l'unité de traitement 19 comprenant un processeur.

Comme illustré à la figure 5, le premier procédé de commande et/ou de contrôle de l'appareil culinaire 3 et de l'appareil de mesure 5 comprend les étapes décrites ci-dessous.

Une étape E0 consiste en la sélection de l'au moins une recette de cuisine dans la liste de recettes de cuisine affichées sur l'interface utilisateur 15. L'interface utilisateur 15 présente alors les ingrédients de la recette de cuisine devant être pesés et en particulier un premier ingrédient que l'utilisateur doit déposer sur la balance.

Une étape E1 consiste en l'affichage d'une grandeur physique GP relative à cet ingrédient comme illustré à la figure 4. La grandeur physique GP est mesurée par le capteur 13 de la balance.

Une étape E2 consiste en la comparaison de la grandeur physique GP à une valeur cible VC qui est définie dans la recette de cuisine.

Une étape E3 consiste ensuite en l'élaboration d'une information d'accomplissement de mesure IAM. Cette étape est mise en oeuvre lorsqu'une information sur la mesure IM de la grandeur physique GP correspond à la valeur cible VC. Une indication IN relative à l'accomplissement de la mesure est ensuite affichée. Un signal sonore peut également être émis pour avertir l'utilisateur sans qu'il ait à regarder l'interface utilisateur 15.

La correspondance entre la valeur cible VC et l'information sur la mesure IM est définie par un écart inférieur à un pourcentage particulier ou par un écart défini dans une unité de la grandeur physique. Dans le procédé présenté l'écart est de 20g et/ou de 5%.

Une étape E4 consiste alors en l'envoi de l'information d'accomplissement de mesure IAM à destination de l'appareil culinaire 3 lorsque le terminal de commande et/ou de contrôle 7 réalise les étapes précédentes.

Une étape E4' additionnelle ou alternative lorsque l'appareil culinaire 3 réalise les étapes E0 à E3 consiste alors à enregistrer l'information d'accomplissement de mesure IAM en mémoire de l'appareil culinaire 3 et/ou du terminal de commande et/ou de contrôle 7.

Cet enregistrement permet à l'appareil culinaire 3 et/ou au terminal de commande et/ou de contrôle 7 de valider la réalisation de la mesure par l'utilisateur sans que l'utilisateur n'ait à valider par une interaction avec l'interface utilisateur 15.

Pour l'ingrédient suivant de la recette de cuisine à peser, les étapes E0 à E3 et E4 et/ou E4' sont à nouveau réalisées. Ainsi l'interface utilisateur 15 propose un autre ingrédient à peser à l'utilisateur sans que celui-ci n'ait à interagir avec l'interface utilisateur 15.

La rapidité de la pesée est ainsi améliorée et l'utilisateur n'a pas besoin de toucher l'interface utilisateur 15 au risque de la salir. Par ailleurs, Ce procédé permet d'utiliser des appareils culinaires 3 et des appareils de mesure 5 existants plutôt que de nécessiter l'achat un nouvel appareil culinaire comprenant un capteur inclus.

### Second procédé de commande et/ou de contrôle du système de préparation

Le second procédé de commande et/ou de contrôle de l'appareil culinaire 3 et de l'appareil de mesure 5 peut être exécuté préalablement au premier procédé avant l'étape E0 de sélection d'une recette de cuisine.

Le second procédé de commande et/ou de contrôle illustré à la figure 6 consiste en la pesée d'un ingrédient disponible puis en la sélection d'une recette de cuisine dans laquelle cet ingrédient pourrait être utilisé.

Une étape e1 consiste en la sélection d'au moins un ingrédient dans la liste d'ingrédients affichée sur l'interface utilisateur 15.

Une étape e2 consiste en l'affichage d'une grandeur physique GP relative à cet ingrédient, la grandeur physique GP étant mesurée par le capteur 13 de l'appareil de mesure 5.

Une étape e3 consiste en la validation d'une information sur la mesure IM de la grandeur physique GP. Une information sur la mesure IM peut être la dernière valeur de la grandeur physique GP et peut être obtenue lorsque la grandeur physique GP mesurée reste sensiblement constante pendant une durée donnée ou suite à une interaction de validation de l'utilisateur au niveau de l'interface utilisateur 15.

L'utilisateur a donc défini la quantité de l'ingrédient qu'il souhaite utiliser pour la préparation d'une recette de cuisine.

Une étape e4 consiste en l'élaboration d'une information d'accomplissement de mesure IAM.

Une étape e5 consiste ensuite en la détermination d'au moins une recette de cuisine de la liste de recettes de cuisine comprenant l'ingrédient selon une quantité correspondant à la valeur cible, l'au moins une recette de cuisine déterminée étant comprise dans une liste restreinte de recettes de cuisine.

Cette étape peut être réalisée au niveau de l'appareil culinaire 3 et/ou du terminal de commande et/ou de contrôle 7 puisque chacun possède un processeur et est apte à communiquer avec l'autre. Il peut également être envisagé de compléter la recherche en se connectant au serveur distant 9.

Cette disposition permet de rechercher toutes les recettes de cuisine pouvant être réalisées par l'appareil culinaire 3 dans laquelle l'ingrédient peut être utilisé selon la quantité mesurée.

Une étape e6 consiste ensuite en la sélection d'au moins une recette de cuisine dans la liste retreinte de recettes de cuisine. L'utilisateur définit ainsi la recette de cuisine qu'il souhaite réaliser par interaction au niveau de l'interface utilisateur 15 en sollicitant la commande de sélection CSE.

Cette étape e6 correspond à l'étape E0 du premier procédé de commande et/ou de contrôle. Une fois la recette de cuisine sélectionnée un ingrédient est déjà mesuré et il est possible de mettre en oeuvre les étapes E0 à E3 et E4 et/ou E4' du premier procédé.

Cette situation a été représentée à la figure 3 dans laquelle une valeur cible VC d'un ingrédient de 60g a été utilisée pour rechercher une recette de cuisine a effectuer.

Le deuxième procédé permet donc à l'utilisateur de déterminer comment consommer un ingrédient qu'il a à disposition et qu'il souhaite consommer. Ce deuxième procédé est une aide à la décision proposant au moins une recette de cuisine pemettant à l'utilisateur de consommer l'ingrédient choisi.

### Procédé d'utilisation du système de préparation

Le premier et le deuxième procédé de commande et/ou de contrôle sont réalisés par un produit programme d'ordinateur comprenant des instructions de code agencées pour mettre en oeuvre leurs étapes, ledit produit programme d'ordinateur étant exécuté sur un processeur de l'appareil culinaire 3 ou d'un terminal de commande et/ou de contrôle 7.

Un procédé d'utilisation du système de préparation 1 est détaillé à la figure 7 et décrit les opérations que doit réaliser un utilisateur pour l'élaboration d'une recette de cuisine.

Le procédé de préparation d'une recette de cuisine comprend les étapes suivantes :
- une étape U00 de saisie d'au moins un ingrédient compris dans la liste d'ingrédients au niveau de la commande de saisie CSA de l'interface utilisateur 15, ladite saisie aboutissant à la définition d'au moins un ingrédient sélectionné,
- une étape U01 de mesure pour l'au moins un ingrédient sélectionné de la grandeur physique GP par le capteur 13,
- une étape U02 de définition d'une liste de recettes de cuisine restreinte de recettes de cuisine à partir de la liste de recettes de cuisine présente dans la mémoire MM en fonction de l'au moins un ingrédient sélectionné via l'interface utilisateur 15 et de la mesure de la grandeur physique GP relative à l'au moins un ingrédient sélectionné, l'au moins un ingrédient sélectionné étant compris dans les recettes de cuisine de la liste restreinte.

Au moins un ingrédient que l'on a à disposition est pesé avant de sélectionner une recette de cuisine à exécuter par le système de préparation 1.

Le procédé de préparation d'une recette de cuisine par le système de préparation 1 comprenant ensuite les étapes suivantes :
- une étape U1 de sélection d'une recette de cuisine comprenant une pluralité d'ingrédients dont les quantités se rapportent à des grandeurs physiques GP dans la liste de recettes de cuisine et d'un nombre de portions individuelles au niveau de la commande de sélection de l'interface utilisateur 15,
- une étape U2 de mesure, pour chaque ingrédient de la pluralité d'ingrédients de la recette de cuisine sélectionnée, d'une grandeur physique GP correspondante par le capteur 13,
- une étape U3 d'introduction de chaque ingrédient de la pluralité d'ingrédients de la recette de cuisine sélectionnée dans le récipient de l'appareil culinaire 3.

L'utilisateur est ainsi guidé par le système de préparation pour qu'il puisse peser à tour de rôle la pluralité des ingrédients de la recette et que la pesée soit automatiquement validée par le système quand la valeur cible VC d'un ingrédient est atteinte.

Comme il va de soi, l'invention ne se limite pas à la seule forme d'exécution décrite ci-dessus à titre d'exemple, elle en embrasse au contraire toutes les variantes de réalisation.

## Revendications

1. Système de préparation (1) d'une recette de cuisine comprenant une pluralité d'ingrédients, ledit système de préparation (1) comprenant :
- un appareil de mesure (5) comprenant :
- un capteur (13) et présentant un emplacement de mesure (14) configuré pour recevoir au moins un ingrédient d'une liste d'ingrédients ou un contenant comprenant ledit au moins un ingrédient, le capteur (13) étant agencé pour réaliser une mesure d'une grandeur physique (GP) relative audit au moins un ingrédient,
- un premier moyen de communication (MC1) avec un terminal de commande et/ou de contrôle (7) adapté pour transmettre une information sur ladite mesure d'une grandeur physique (GP) relative audit au moins un ingrédient à destination du terminal de commande et/ou de contrôle (7),
- un appareil culinaire (3) comprenant :
- un récipient (11) apte à recevoir la pluralité d'ingrédients de la recette de cuisine,
- un deuxième moyen de communication (MC2) avec le terminal de commande et/ou de contrôle (7) adapté pour recevoir une instruction de commande (IC) en provenance du terminal de commande et/ou de contrôle (7) et de préférence également adaptés pour transmettre une information de contrôle (ICT) à destination du terminal de commande et/ou de contrôle (7),
**caractérisé en ce que** le terminal de commande et/ou de contrôle (7) comprend un même troisième moyen de communication (MC3) adapté pour échanger des informations simultanément d'une part avec l'appareil de mesure (5) et d'autre part avec l'appareil culinaire (3), ledit troisième moyen de communication (MC3) utilisant un même port de communication pour communiquer à la fois avec le premier moyen de communication (MC1) de l'appareil de mesure (5) et avec le deuxième moyen de communication (MC2) de l'appareil culinaire (3).

2. Système de préparation (1) d'une recette de cuisine selon la revendication 1, comportant :
- une mémoire (MM) comprenant la liste d'ingrédients et une liste de recettes de cuisine aptes à être réalisées par l'appareil culinaire (3), chaque recette de cuisine comprenant une pluralité d'ingrédients de la liste d'ingrédients en des quantités données correspondant à un nombre donné de portions individuelles,
- une interface utilisateur (15) comprenant :
- une commande de saisie d'au moins un ingrédient de la liste d'ingrédients, la commande de saisie étant apte à définir au moins un ingrédient sélectionné correspondant, et/ou
- une commande de sélection d'une recette de cuisine de la liste de recettes de cuisine et d'un nombre de portions individuelles, la commande de sélection étant apte à définir une recette de cuisine sélectionnée correspondante.

3. Système de préparation (1) d'une recette de cuisine selon la revendication 2, dans lequel le terminal de commande et/ou de contrôle (7) comprend une unité centrale (17) pourvue d'un processeur agencé pour générer :
- une liste restreinte de recettes de cuisine à partir de la liste de recettes de cuisine présente dans la mémoire (MM) en fonction de l'au moins un ingrédient sélectionné via l'interface utilisateur (15) et de l'information sur ladite mesure d'une grandeur physique (GP) relative à l'au moins un ingrédient sélectionné, et/ou
- une information d'accomplissement de mesure (IAM) en fonction de la recette de cuisine sélectionnée et de l'information sur ladite mesure d'une grandeur physique (GP) relative à un ingrédient correspondant de la recette de cuisine sélectionnée.

4. Système de préparation (1) d'une recette de cuisine selon la revendication 3, dans lequel l'information d'accomplissement de mesure (IAM) comprend l'information sur la mesure et/ou un renseignement d'accomplissement de la mesure dudit ingrédient.

5. Système de préparation (1) d'une recette de cuisine selon l'une des revendications 2 à 4 dans lequel la mémoire (MM) est comprise au moins partiellement dans l'appareil culinaire (3), le terminal de commande et/ou de contrôle (7) et/ou un serveur distant (9), le serveur distant (9) étant configuré pour échanger des informations avec l'appareil culinaire (3) et/ou le terminal de commande et/ou de contrôle (7).

6. Système de préparation (1) d'une recette de cuisine selon l'une des revendications 2 à 5, dans lequel l'interface utilisateur (15) est disposée sur l'appareil culinaire (3) et/ou sur le terminal de commande et/ou de contrôle (7).

7. Système de préparation (1) d'une recette de cuisine selon l'une des revendications 2 à 6, dans lequel l'interface utilisateur (15) est configurée pour afficher l'information sur la mesure et/ou une valeur cible (VC) correspondant à une quantité d'un ingrédient de la recette de cuisine sélectionnée.

8. Système de préparation (1) d'une recette de cuisine selon l'une des revendications 2 à 7, dans lequel l'interface utilisateur (15) est configurée pour émettre un signal relatif à l'information d'accomplissement de mesure (IAM).

9. Système de préparation (1) d'une recette de cuisine selon l'une des revendications 1 à 8, dans lequel le terminal de commande et/ou de contrôle (7) est configuré pour échanger des informations d'une part avec l'appareil culinaire (3) préalablement appairé et d'autre part avec l'appareil de mesure (5) sans appairage préalable.

10. Procédé de préparation d'une recette de cuisine par un système de préparation (1) selon l'une des revendications 3 à 9 pourvu qu'elle dépende de la revendication 2, le procédé de préparation comprenant les étapes suivantes :
- (U1) sélection d'une recette de cuisine comprenant une pluralité d'ingrédients dont les quantités se rapportent à des grandeurs physiques (GP) dans la liste de recettes de cuisine et d'un nombre de portions individuelles au niveau de la commande de sélection de l'interface utilisateur (15),
- (U2) mesure, pour chaque ingrédient de la pluralité d'ingrédients de la recette de cuisine sélectionnée, d'une grandeur physique (GP) correspondante par le capteur (13),
- (U3) introduction de chaque ingrédient de la pluralité d'ingrédients de la recette de cuisine sélectionnée dans le récipient (11) de l'appareil culinaire (3).

11. Procédé de préparation d'une recette de cuisine selon la revendication 10, comprenant les étapes préalables suivantes :
- (U00) saisie d'au moins un ingrédient compris dans la liste d'ingrédients au niveau de la commande de saisie de l'interface utilisateur (15), ladite saisie aboutissant à la définition d'au moins un ingrédient sélectionné,
- (U01) mesure pour l'au moins un ingrédient sélectionné de la grandeur physique (GP) par le capteur (13)
- (U02) définition d'une liste de recettes de cuisine restreinte de recettes de cuisine à partir de la liste de recettes de cuisine présente dans la mémoire (MM) en fonction de l'au moins un ingrédient sélectionné via l'interface utilisateur (15) et de la mesure de la grandeur physique (GP) relative à l'au moins un ingrédient sélectionné, l'au moins un ingrédient sélectionné étant compris dans les recettes de cuisine de la liste restreinte.

## Patentansprüche

1. Zubereitungssystem (1) für ein Kochrezept mit mehreren Zutaten, wobei das Zubereitungssystem (1) Folgendes umfasst:
- ein Messgerät (5), umfassend:
- einen Sensor (13) mit einer Messstelle (14), die konfiguriert ist, um mindestens eine Zutat aus einer Zutatenliste oder einem Behälter, der die mindestens eine Zutat umfasst, aufzunehmen, wobei der Sensor (13) so angeordnet ist, dass er eine Messung einer physikalischen Größe (GP) bezüglich der mindestens einen Zutat durchführt,
- ein erstes Kommunikationsmittel (MC1) mit einem Befehls- und/oder Steuerterminal (7), das ausgelegt ist, um Informationen über die Messung einer physikalischen Größe (GP) bezüglich der mindestens einen Zutat an das Befehls- und/oder Steuerterminal (7) zu übertragen,
- ein Küchengerät (3), umfassend:
- ein Gefäß (11), das die Vielzahl von Zutaten des Kochrezepts aufnehmen kann,
- ein zweites Kommunikationsmittel (MC2) mit dem Befehls- und/oder Steuerterminal (7), das ausgelegt ist, um eine Befehlsanweisung (IC) zu empfangen, die von dem Befehls- und/oder Steuerterminal (7) kommt, und vorzugsweise auch ausgelegt ist, um Steuerinformationen (IKT) an das Befehls- und/oder Steuerterminal (7) zu übertragen,
**dadurch gekennzeichnet, dass** das Befehls- und/oder Steuerterminal (7) ein gleiches drittes Kommunikationsmittel (MC3) umfasst, das ausgelegt ist, um gleichzeitig Informationen einerseits mit dem Messgerät (5) und andererseits mit dem Küchengerät (3) auszutauschen, wobei das dritte Kommunikationsmittel (MC3) denselben Kommunikationsanschluss zum Kommunizieren sowohl mit dem ersten Kommunikationsmittel (MC1) des Messgeräts (5) als auch mit dem zweiten Kommunikationsmittel (MC2) des Gargeräts (3) verwendet.

2. Zubereitungssystem (1) für ein Kochrezept nach Anspruch 1, aufweisend:
- einen Speicher (MM), der die Zutatenliste und eine Liste mit Kochrezepten, die von dem Kochgerät (3) hergestellt werden sollen, umfasst, wobei jedes Kochrezept eine Vielzahl von Zutaten aus der Zutatenliste in vorgegebenen Mengen entsprechend einer vorgegebenen Anzahl von Einzelportionen umfasst,
- eine Benutzerschnittstelle (15), umfassend:
- einen Eingabebefehl für mindestens eine Zutat aus der Zutatenliste, wobei der Eingabebefehl mindestens eine entsprechende ausgewählte Zutat definieren kann, und/oder
- einen Auswahlbefehl für ein Kochrezept aus der Liste mit Kochrezepten und mehreren Einzelportionen, wobei der Auswahlbefehl ein entsprechendes ausgewähltes Kochrezept definieren kann.

3. Zubereitungssystem (1) für ein Kochrezept nach Anspruch 2, wobei das Befehls- und/oder Steuerterminal (7) eine Zentraleinheit (17) umfasst, die mit einem Prozessor versehen ist, der angeordnet ist, um Folgendes zu erzeugen:
- eine kurze Liste mit Kochrezepten aus der Liste mit Kochrezepten, die im Speicher (MM) in Abhängigkeit von der mindestens einen Zutat, die über die Benutzerschnittstelle (15) ausgewählt wird, und der Information über die Messung einer physikalischen Größe (GP) bezüglich der mindestens einen ausgewählten Zutat dargestellt wird, und/oder
- Messabschlussinformationen (IAM) in Abhängigkeit von dem ausgewählten Kochrezept und den Informationen über die Messung einer physikalischen Größe (GP) bezüglich einer Zutat, die dem ausgewählten Kochrezept entspricht.

4. Zubereitungssystem (1) für ein Kochrezept nach Anspruch 3, wobei die Messabschlussinformationen (IAM) Messinformationen und/oder Messabschlussinformationen der Zutat umfassen.

5. Zubereitungssystem (1) für ein Kochrezept nach einem der Ansprüche 2 bis 4, wobei der Speicher (MM) zumindest teilweise in dem Küchengerät (3), dem Befehls- und/oder Steuerterminal (7) und/oder einem Remote-Server (9) enthalten ist, wobei der Remote-Server (9) konfiguriert ist, um Informationen mit dem Küchengerät (3) und/oder dem Befehls- und/oder Steuerterminal (7) auszutauschen.

6. Zubereitungssystem (1) für ein Kochrezept nach einem der Ansprüche 2 bis 5, wobei die Benutzerschnittstelle (15) sich am Küchengerät (3) und/oder am Befehls- und/oder Steuerterminal (7) befindet.

7. Zubereitungssystem (1) für ein Kochrezept nach einem der Ansprüche 2 bis 6, wobei die Benutzerschnittstelle (15) konfiguriert ist, um die Informationen über die Messung und/oder einen Zielwert (VC), die bzw. der einer Menge einer Zutat des ausgewählten Kochrezepts entspricht, anzuzeigen.

8. Zubereitungssystem (1) für ein Kochrezept nach einem der Ansprüche 2 bis 7, wobei die Benutzerschnittstelle (15) konfiguriert ist, um ein Signal bezüglich der Messabschlussinformationen (IAM) auszugeben.

9. Zubereitungssystem (1) für ein Kochrezept nach einem der Ansprüche 1 bis 8, wobei das Befehls- und/oder Steuerterminal (7) konfiguriert ist, um Informationen einerseits mit dem Küchengerät (3), das vorher angekoppelt wird, und andererseits mit dem Messgerät (5) ohne vorherige Kopplung auszutauschen.

10. Verfahren zum Zubereiten eines Kochrezepts durch ein Zubereitungssystem (1) nach einem der Ansprüche 3 bis 9, sofern dieses von Anspruch 2 abhängt, wobei das Zubereitungsverfahren die folgenden Schritte umfasst:
- (U1) Auswählen eines Kochrezepts, das eine Vielzahl von Zutaten umfasst, deren Mengen sich auf physikalische Größen (GP) in der Liste mit Kochrezepten und eine Anzahl von Einzelportionen auf der Ebene des Befehls zur Auswahl der Benutzeroberfläche (15) beziehen,
- (U2) Messen einer entsprechenden physikalischen Größe (GP) durch den Sensor (13) für jede Zutat der Vielzahl von Zutaten des ausgewählten Kochrezepts,
- (U3) Einbringen jeder Zutat der Vielzahl von Zutaten des ausgewählten Kochrezepts in das Gefäß (11) des Kochgeräts (3).

11. Verfahren zum Zubereiten eines Kochrezepts nach Anspruch 10, umfassend die folgenden vorherigen Schritte:
- (U00) Eingeben der mindestens einen in der Zutatenliste enthaltenen Zutat auf der Ebene des Eingabebefehls der Benutzerschnittstelle (15), wobei die Eingabe zur Definition der mindestens einen ausgewählten Zutat führt,
- (U01) Messen der mindestens einen Zutat, die aus der physikalischen Größe (GP) durch den Sensor (13) ausgewählt wird,
- (U02) Definieren einer kleinen Liste mit Kochrezepten aus der im Speicher (MM) enthaltenen Liste mit Kochrezepten der Kochrezepte in Abhängigkeit der mindestens einen über die Benutzerschnittstelle (15) ausgewählten Zutat und der Messung der physikalischen Größe (GP) bezüglich der mindestens einen ausgewählten Zutat, wobei die mindestens eine ausgewählte Zutat in den Kochrezepten der kurzen Liste enthalten ist.

## Claims

1. A system (1) for preparing a recipe comprising a plurality of ingredients, said preparation system (1) comprising:
- a measuring appliance (5) comprising:
- a sensor (13) and having a measurement location (14) configured to receive at least one ingredient from a list of ingredients or a container comprising said at least one ingredient, the sensor (13) being arranged to perform a measurement of a physical quantity (GP) relating to said at least one ingredient,
- a first means of communication (MC1) with a command and/or control terminal (7) suitable for transmitting information on said measurement of a physical quantity (GP) relating to said at least one ingredient to the command and/or control terminal (7),
- a cooking appliance (3) comprising:
- a container (11) capable of receiving the plurality of ingredients of the recipe,
- a second means of communication (MC2) with the command and/or control terminal (7) adapted to receive a command instruction (IC) coming from the command and/or control terminal (7) and preferably also suitable for transmitting control information (ICT) to the command and/or control terminal (7),
**characterized in that** the command and/or control terminal (7) comprises the same third means of communication (MC3) suitable for exchanging information simultaneously on the one hand with the measuring device (5) and on the other hand with the cooking appliance (3), said third communication means (MC3) using the same communication port to communicate both with the first communication means (MC1) of the measuring appliance (5) and with the second means of communication (MC2) of the cooking appliance (3).

2. The system (1) for preparing a recipe according to claim 1, including:
- a memory (MM) comprising the list of ingredients and a list of recipes capable of being produced by the cooking appliance (3), each recipe comprising a plurality of ingredients from the list of ingredients in given quantities corresponding to a given number of individual servings,
- a user interface (15) comprising:
- a command of entering at least one ingredient from the list of ingredients, the entry command being capable of defining at least one corresponding selected ingredient, and/or
- a command of selecting a recipe from the list of recipes and a number of individual servings, the selection command being able to define a corresponding selected recipe.

3. The system for preparing (1) a recipe according to claim 2, wherein the command and/or control terminal (7) comprises a central unit (17) provided with a processor arranged to generate:
- a restricted list of recipes from the list of recipes present in the memory (MM) according to the at least one ingredient selected via the user interface (15) and the information on said measurement of a physical quantity (GP) relating to the at least one selected ingredient, and/or
- a measurement completion information (IAM) according to the selected recipe and the information on said measurement of a physical quantity (GP) relating to a corresponding ingredient of the selected recipe.

4. The system for preparing (1) a recipe according to claim 3, wherein the measurement completion information (IAM) comprises the measurement information and/or measurement completion detail of said ingredient.

5. The system for preparing (1) a recipe according to any of claims 2 to 4 wherein the memory (MM) is comprised at least partially in the cooking appliance (3), the command and/or control terminal (7) and/or a remote server (9), the remote server (9) being configured to exchange information with the cooking appliance (3) and/or the command and/or control terminal (7).

6. The system for preparing (1) a recipe according to any of claims 2 to 5, wherein the user interface (15) is arranged on the cooking appliance (3) and/or on the command and/or control terminal (7).

7. The system for preparing (1) a recipe according to any of claims 2 to 6, wherein the user interface (15) is configured to display the measurement information and/or a target value (VC) corresponding to a quantity of an ingredient of the selected recipe.

8. The system for preparing (1) a recipe according to any of claims 2 to 7, wherein the user interface (15) is configured to transmit a signal relating to measurement completion information (IAM).

9. The system for preparing (1) a recipe according to any of claims 1 to 8, wherein the command and/or control terminal (7) is configured to exchange information on the one hand with the cooking appliance (3) previously paired and on the other hand with the measuring appliance (5) without prior pairing.

10. A method for preparing a recipe by a preparation system (1) according to any of claims 3 to 9 provided that it depends on claim 2, the preparation method comprising the following steps of:
- (U1) selecting a recipe comprising a plurality of ingredients whose quantities relate to physical quantities (GP) in the list of recipes and of a number of individual servings at the level of the user interface selection command (15),
- (U2) measuring, for each ingredient of the plurality of ingredients of the selected recipe, a corresponding physical quantity (GP) by the sensor (13),
- (U3) introducing each ingredient of the plurality of ingredients of the selected recipe into the container (11) of the cooking appliance (3).

11. The method for preparing a recipe according to claim 10, comprising the following preliminary steps:
- (U00) entering at least one ingredient comprised in the list of ingredients at the user interface entry command (15), said entry resulting in the definition of at least one selected ingredient,
- (U01) measuring the physical quantity (GP) for at least one selected ingredient by the sensor (13)
- (U02) defining a list of recipes restricted from recipes from the list of recipes present in the memory (MM) according to the at least one ingredient selected via the user interface (15) and the measurement of the physical quantity (GP) relating to the at least one selected ingredient, the at least one selected ingredient being comprised in the recipes of the restricted list.
